# EUROPÄISCHE PATENTSCHRIFT

(11) **EP 4 452 699 B1**
(45) Veröffentlichungstag und Bekanntmachung des Hinweises auf die Patenterteilung: **10.12.2025**
(21) Anmeldenummer: 22809096.5
(22) Anmeldetag: 25.10.2022
(51) Int. Cl.: B60R 22/26, B60N 2/42, B60N 2/427, B60N 2/68

(54) **RÜCKHALTEANORDNUNG FÜR EIN FAHRZEUG UND KORRESPONDIERENDES BETRIEBSVERFAHREN**
RESTRAINT ASSEMBLY FOR A VEHICLE, AND CORRESPONDING OPERATING METHOD
ENSEMBLE DE RETENUE POUR VÉHICULE ET PROCÉDÉ DE FONCTIONNEMENT CORRESPONDANT

(30) Priorität: 21.12.2021 DE 102021133951
(43) Veröffentlichungstag der Anmeldung: 30.10.2024
(73) Patentinhaber: Audi AG, 85045 Ingolstadt (DE)
(72) Erfinder: BÜCHNER, Sebastian, 97737 Gemünden (DE)
(86) Internationale Anmeldenummer: PCT/EP2022/079751
(87) Internationale Veröffentlichungsnummer: WO 2023/117186

(56) Entgegenhaltungen:
- DE-A1- 102013 224 666
- DE-A1- 102019 005 142
- DE-A1- 102019 118 845
- DE-A1- 3 813 557
- FR-A5- 2 162 940
- US-A1- 2017 015 272
- US-A1- 2020 290 551

## Beschreibung

Die Erfindung betrifft eine Rückhalteanordnung für ein Fahrzeug. Des Weiteren betrifft die Erfindung ein Betriebsverfahren für eine solche Rückhalteanordnung. Die US2017/015272A1 offenbart eine Rückhalteanordnung nach dem Oberbegriff von Anspruch 1.

Rückhalteanordnungen für Fahrzeuge sind in zahlreichen Variationen bekannt. Aktuell besteht eine konventionelle Rückhalteanordnung für Frontalunfälle aus Airbags im Lenkrad zum Schutz des Fahrers und in der Instrumententafel zum Schutz des Beifahrers. Hierbei umschließen Sicherheitsgurte den Brustkorb und das Becken des Insassen. Wird ein Unfall bzw. Crash von der Sensorik erkannt, findet eine Straffung an den Enden des Sicherheitsgurts mit einer definierten Kraft statt. Während des Aufpralls sorgt ein so genannter Gurtretraktor, welcher am Ende des Sicherheitsgurts angeordnet ist, an der Schulter des Insassen für eine Begrenzung der entstehenden Kraft bei der Vorverlagerung des Insassen. Hierdurch werden Verletzungen an den Rippen verhindert und der Insasse kontrolliert an den korrespondierenden Airbag angekoppelt. Der Airbag reduziert Verletzungen des Kopfes indem der Kopf möglichst gleichmäßig abgebremst wird. Der Airbag nimmt in vielen Fällen ebenfalls kinetische Energie des Brustkorbes auf. Zudem gibt es Rückhaltesysteme zur Begrenzung der Beckenvorverlagerung, wie beispielsweise ein Endbeschlagstraffer oder ein Sitzrampenairbag. Diese beeinflussen die Insassenkinematik positiv und vermeiden auch einen Kontakt der Knie mit der Instrumententafel.

Für Komfortpositionen, welche in der Regel einen hohen Lehnenwinkel im Bereich ca. 40° aufweisen, wie sie pilotiertes Fahren ermöglicht, sind zusätzliche Anpassungen erforderlich. Auch bei Rückhalteanordnungen für Komfortpositionen werden Sicherheitsgurte und Airbags verwendet, um den Insassen zu schützen. Hierbei wird der Sicherheitsgurt hauptsächlich zum Rückhalt des Beckens und Brustkorb verwendet. Airbags verringern zusätzlich das Verletzungsrisiko des Kopfes. Für den Sicherheitsgurt existieren prinzipiell zwei Möglichkeiten. So ist mit Anpassungen beispielsweise eine Anbindung des Sicherheitsgurts an der B-Säule wie bisher möglich. Eine konventionelle Gurtanbindung und ein hoher Lehnenwinkel verursacht einen Abstand zwischen Sicherheitsgurt und dem Brustkorb des Insassen. Hierdurch wird der Energieabbau durch den Sicherheitsgurt negativ beeinflusst. Eine mögliche Gegenmaßnahme besteht darin, den Sicherheitsgurt weiter nach unten zu positionieren, bis dieser wieder vollständig an den Thorax des Insassen ankoppeln kann. Da jedoch nur eine sehr geringer Verstellmöglichkeit bei Lehnenwinkel und Sitzverstellung nach hinten möglich ist wird diese Lösung kaum betrachtet. Eine bessere Alternative, welche für Komfortpositionen mehr Vorteile bietet, besteht darin, den Gurtretraktor und somit den Gurtaustritt in den Sitz zu integrieren. Auch wenn der Sitz und der Insasse weit nach hinten gelehnt sind befindet sich die Gurtposition immer nahe der Schulter und bietet somit einen effektiven Rückhalt.

Für Airbags existieren bei Komfortpositionen die folgenden Lösungen. Zum einen können herkömmliche Airbags um eine Adaptivität bezüglich der Tiefe erweitert werden. Hierdurch sind die Airbags länger, wenn der Insasse nach hinten gelehnt ist, oder der Sitz weiter von der Instrumententafel entfernt ist. Zudem gibt es Airbagsysteme, bei denen zwei Airbags in der Sitzlehne den Insassen umschließen. Beide Airbags berühren sich vor dem Insassen. Der Kopf wird von beiden Airbags zurückgehalten. Auch bei diesem System sind teilweise noch Airbags in der Instrumententafel notwendig, da eine Kollision mit dem Lenkrad in der Normalposition, in welcher der Insasse fährt, stattfinden kann. Grund ist ein meist sehr großes Volumen der Airbags, welches mit dem Lenkrad kollidieren kann. Auch gibt es Sitzkonstruktionen, die beweglich auf einer Schiene befestigt sind. Hierbei kann der gesamte Sitz im Crashfall beispielsweise um 200mm translatorisch verzögert werden. Airbags im Lenkrad und in der Instrumententafel können den Insassen am Ende der Vorverlagerung des Sitzgestells zusätzlich verzögern.

Als nachteilig kann bei den bekannten Rückhalteanordnungen angesehen werden, dass sich der Thorax über eine Ankopplung an den Sicherheitsgurt nach vorne bewegt. Eine feste Ankopplung des Kopfes direkt an die Sitzlehne oder Kopfstütze ist ohne ein hohes Verletzungsrisiko am Hals nicht direkt möglich. Bisherige Systeme sind aus diesem Grund meist auf Airbags im Fahrzeuginnenraum angewiesen, die beispielsweise im Lenkrad oder in der Instrumententafel angeordnet sind. Hierdurch kann die Insassenposition nicht beliebig variiert werden. So kann der Sitz beispielsweise nicht über einen maximal möglichen Weg von beispielsweise 500mm nach hinten verschoben werden.

Rückhalteanordnungen, welche nicht auf Airbags im Innenraum angewiesen sind, entfalten beispielsweise Airbags links und rechts neben dem Insassen. Diese haben den Nachteil, dass leicht unterschiedliche Sitzposition des Insassen zum Versagen der Rückhaltewirkung führen kann, da ein Umschließen des Insassen erschwert ist, wenn der Insasse sich beispielsweise dreht, um mit anderen Insassen zu reden. Eine dämpfende Wirkung kann hierbei auch nur begrenzt realisiert werden, da sich die Airbags am Thorax abstützen, der Kopf jedoch eine Vorverlagerung zum Energieabbau benötigt. Diese konkurrierenden Anforderungen erfordern ein deutlich komplexeres Airbagdesign als bisher. Zudem ist die Hauptwirkung also das Ziel einer Rückhalteanordnung, die dämpfende Wirkung auf den Insassen zur Vermeidung von Verletzungen zu begrenzen, nur bis zu einem bestimmten Grad möglich.

Aus der DE 38 13 557 A1 ist ein Fahrzeugsitz mit einem zugeordneten Sicherheitsgurtsystem bekannt. Bei einem solchen Fahrzeugsitz ist zumindest ein der Schulter des Sitzinsassen zugekehrter oberer Anlenkpunkt des Sicherheitsgurtsystems unmittelbar an der neigungsverstellbaren Rückenlehne des Fahrzeugsitzes angeordnet. Um die bei starker Verzögerung wirkenden hohen Biegemomente sicher von der Rückenlehne in den Aufbau übertragen zu können, ist die Rückenlehne unterhalb des oberen Anlenkpunkts des Sicherheitsgurtsystems über ein Halteglied fest mit einem aufbauseitig angeordneten, relativ hochgezogenen Mitteltunnel verbunden. Das dem Mitteltunnel zugewandte Ende des Haltegliedes verläuft in Fahrtrichtung gesehen hinter der Rückenlehne des Fahrzeugsitzes.

Der Erfindung liegt die Aufgabe zu Grunde, eine Rückhalteanordnung für ein Fahrzeug und ein Betriebsverfahren für eine solche Rückhalteanordnung bereitzustellen, welche eine Insassenbelastung im Crashfall in verschiedenen Lehnenstellungen eines Fahrzeugsitzes auch ohne zusätzliche Airbags im Fahrzeuginnenraum optimiert.

Diese Aufgabe wird durch eine Rückhalteanordnung für ein Fahrzeug mit den Merkmalen des Patentanspruchs 1 und durch ein Betriebsverfahren für eine solche Rückhalteanordnung mit den Merkmalen des Patentanspruchs 13 gelöst. Vorteilhafte Ausgestaltungen mit zweckmäßigen Weiterbildungen der Erfindung sind in den abhängigen Patentansprüchen angegeben.

Um eine Rückhalteanordnung für ein Fahrzeug bereitzustellen, welche eine Insassenbelastung im Crashfall in verschiedenen Lehnenstellungen eines Fahrzeugsitzes auch ohne zusätzliche Airbags im Fahrzeuginnenraum optimiert, ist eine erste Rückhaltevorrichtung ausgeführt, im Crashfall einen Kopf eines auf dem Fahrzeugsitz sitzenden Insassen fest an eine drehbar gelagerte Leitstruktur anzukoppeln. Eine zweite Rückhaltevorrichtung ist ausgeführt, im Crashfall einen Thorax des auf dem Fahrzeugsitz sitzenden Insassen fest an die drehbar gelagerte Leitstruktur anzukoppeln. Eine dritte Rückhaltevorrichtung ist ausgeführt, einen Energieabbau des Insassen im Crashfall durch eine definierte Vorverlagerung der drehbar gelagerten Leitstruktur zu bewirken, an welcher der Insasse im Crashfall mit Kopf und Thorax mit geringer Bewegungsfreiheit angekoppelt ist, wobei die drehbar gelagerte Leitstruktur in Fahrtrichtung im Bereich hinter der Kopfstütze und hinter der Sitzlehne ausgebildet ist.

Zudem wird ein Betriebsverfahren für eine solche Rückhalteanordnung vorgeschlagen. Hierbei wird im Crashfall ein Kopf und ein Thorax eines in einem Fahrzeugsitz sitzenden Insassen fest an eine drehbar gelagerte Leitstruktur angekoppelt, welche in Fahrtrichtung im Bereich hinter einer Kopfstütze und hinter einer Sitzlehne eines Fahrzeugsitzes ausgebildet ist, wobei durch eine definierte Vorverlagerung der drehbar gelagerten Leitstruktur ein Energieabbau des Insassen im Crashfall bewirkt wird.

Im Gegensatz zu bisherigen Rückhalteanordnungen wird der Insasse im Crashfall an die Leitstruktur fest angekoppelt. Hierzu wird der Insasse an Kopf und Thorax mit einer geringen Bewegungsfreiheit an die Leitstruktur angebunden. Eine große Vorverlagerung des Insassen relativ zu dieser Leitstruktur gibt es im Gegensatz zu bisherigen Rückhalteanordnungen nicht. Der Energieabbau des Insassen erfolgt durch eine definierte Vorverlagerung bzw. Rotation, also durch ein Abbremsen der Leitstruktur. Eine optimale Rückhaltewirkung des Insassen kann durch ein adaptives Verhalten der dritten Rückhaltvorrichtung realisiert werden. So kann beispielsweise in Abhängigkeit von einer Anthropometrie des Insassen, wie Größe und Gewicht, und eines Lehnenwinkels des Fahrzeugsitzes die Vorverlagerung der Leitstruktur so eingestellt werden, dass die Insassenbelastungen minimal sind. Die maximal mögliche Vorverlagerung der Leitstruktur kann durch die biomechanischen Grenzen des Insassen und/oder durch den Innenraum definiert und so vorgegeben werden, dass ein Einklemmen des Insassen und ein Kontakt des Insassen mit harten Bauteilen verhindert werden kann. Die Vorverlagerung der Leitstruktur kann beispielsweise durch einen Anschlag begrenzt werden. Der Zusammenhang zwischen diesen Eingangswerten und der definierten Vorverlagerung kann beispielsweise während der Entwicklung mit FE-Simulationen bestimmt werden.

Durch Ausführungsformen der erfindungsgemäßen Rückhalteanordnung sind Komfortsitzpositionen, insbesondere für pilotiertes Fahren möglich, bei denen sich der Insasse in einer zurückgelehnten Position befindet oder weit entfernt von der Instrumententafel sitzt. Dies wird dem Insassen ohne Einschränkungen durch zusätzliche sichtbare Rückhaltesystemkomponenten im Vergleich zu konventionellen Systemen ermöglicht. Hierbei kann bei Ausführungsformen der Rückhalteanordnung auf Airbags in der Instrumententafel verzichtet werden. Dies ermöglicht ein komplett neues Innenraumdesign. Durch den Energieabbau der Leitstruktur im Bereich des Fahrzeugsitzes ist zudem ein optimaler Energieabbau je nach Anthropometrie des Insassen möglich, so dass ein optimaler Schutz für kleine, leichte Frauen und gleichzeitig für große schwere Männer ermöglicht wird. Darüber hinaus ist es möglich, dass der Insasse in der Komfortposition in vielen Körperbereichen noch besser geschützt werden kann als in normalen Sitzpositionen, bei welchen der Insasse näher an der Instrumententafel positioniert ist. Dies ist realisierbar, da die in der Komfortposition mögliche größere Vorverlagerung des Insassen optimal genutzt werden kann, da ein gleicher Energieabbau über einen längeren Weg einer geringerer Belastung für den Insassen entspricht. Durch die Ankopplung an die Leitstruktur ist zudem ein Energieabbau zu einem sehr frühen Zeitpunkt möglich. Beschleunigungsspitzen zu einem späteren Zeitpunkt können so reduziert oder ganz vermieden werden. Eine Halsüberstreckung oder hohe Zugkräfte in der Halswirbelsäule werden durch eine gleichzeitige Ankopplung von Kopf und Thorax an der Leitebene vermieden. Der Kopf befindet sich immer in der gleichen Relativposition zum Thorax. Eine Überdehnung und folgende Halsverletzungen können so vermieden werden.

Im Vergleich zu anderen Systemen für Komfortpositionen, die weitestgehend auf Airbags in der Instrumententafel verzichten und beispielsweise Airbags für den Thorax im Fahrzeugsitz einsetzen, werden Insassen in Positionen auch dann noch robust geschützt, welche nicht dem Auslegungsstand entsprechen, wie beispielsweise bei einem gedrehten Oberkörper bei Gesprächen mit anderen Insassen. Auch der Schutz des Kopfes kann durch eine entsprechende Positionierung der ersten und zweiten Rückhaltevorrichtung bei sehr kleinen und sehr großen Insassen leichter umgesetzt werden.

In vorteilhafter Ausgestaltung der Rückhalteanordnung kann eine Auswerte- und Steuereinheit ausgeführt sein, basierend auf mindestens einer Eingangsgröße mindestens eine Ausgangsgröße zu ermitteln und die Vorverlagerung der drehbar gelagerten Leitstruktur entsprechend der ermittelten Ausgangsgröße über die dritte Rückhaltevorrichtung einzustellen. Die mindestens eine Eingangsgröße kann beispielsweise eine Anthropometrie des Insassen und/oder einen Neigungswinkel der Sitzlehne und/oder eine Position des Fahrzeugsitzes und/oder einen Fahrzeugpuls betreffen. Die mindestens eine Ausgangsgröße kann beispielsweise eine durch die dritte Rückhaltevorrichtung zu erzielende adaptive Dämpfungswirkung auf die Leitstruktur betreffen. Für die Sicherheit der Fahrzeuginsassen bei einem Frontalaufprall ist eine abgestimmte Rückhalteanordnung von großer Bedeutung. Ein signifikanter Parameter dabei ist die Fahrzeugverzögerung, die während eines Crash auf die Insassen einwirkt, der so genannte "Crash-Puls". Die Variation von Crash-Pulsen hat entscheidenden Einfluss auf das gesamte Systemverhalten. Es existieren verschiedene Crash-Puls-Kriterien, die eine Korrelation zu Verletzungswerten in verschiedenen Lastfällen zeigen, beispielsweise das Occupant Load Criterion (OLC), der Sliding Mean und der Geschwindigkeitsnulldurchgang. Durch Ausführungsformen der Erfindung können geeignete Kriterien definiert werden, die eine robuste Einschätzung der Crash-Puls-Härte erlauben und als Basis für eine Vorauswahl der potenziell erforderlichen Rückhaltekomponenten dienen können.

In weiterer vorteilhafter Ausgestaltung der Rückhalteanordnung kann die erste Rückhaltevorrichtung vorzugsweise im Bereich der Kopfstütze angeordnet sein und beispielsweise einen Kopfairbag umfassen, welcher im Ruhezustand in der Kopfstütze integriert ist und im Crashfall den Kopf des Insassen über die Kopfstütze fest an die drehbar gelagerte Leitstruktur ankoppeln kann.

In weiterer vorteilhafter Ausgestaltung der Rückhalteanordnung kann die zweite Rückhaltevorrichtung vorzugsweise im Bereich der Sitzlehne angeordnet sein und beispielsweise ein Gurtsystem mit mindestens einem Sicherheitsgurt und mindestens einem Gurtretraktor umfassen, welches im Crashfall den Thorax des Insassen über die Sitzlehne fest an die drehbar gelagerte Leitstruktur ankoppeln kann. Der Gurtretraktor kann vorzugsweise ausgeführt sein, den Sicherheitsgurt im Crashfall zu straffen. Zudem kann eine Höhenverstellung der Kopfstütze mit einer Höhenverstellung des Gurtretraktors gekoppelt sein. Durch die Höhenverstellung können die Kopfstütze und der Gurtretraktor abhängig von der Körpergröße optimal für den Insassen eingestellt werden. Die Höhenverstellung der Kopfstütze ermöglicht eine optimale Entfaltung des Airbags in der Kopfstütze. Der Gurtretraktor selbst kann parallel mitverschoben werden, um eine optimale Gurtanbindung zu garantieren und den höchsten Tragekomfort zu gewährleisten. Hierdurch wird auch sichergestellt, dass beispielsweise kleine Insassen die Kopfstütze nicht komplett nach oben schieben, so dass der Airbag den Kopf nicht zurückhalten kann. Die Gurtführung wäre in diesem Fall sehr unbequem für den Insassen, so dass dieser die Position der Kopfstütze und damit die Position des Gurtretraktors durch eine Verschiebung nach unten entsprechend anpassen würde.

In weiterer vorteilhafter Ausgestaltung der Rückhalteanordnung kann die dritte Rückhaltevorrichtung als Dämpfungsvorrichtung mit mindestens einem Dämpfungselement ausgeführt sein. Durch das mindestens eine Dämpfungselement kann die wirksame Dämpfung der Vorverlagerung der Leitstruktur einfach und vorzugsweise stufenlos eingestellt werden.

In weiterer vorteilhafter Ausgestaltung der Rückhalteanordnung kann das Dämpfungselement beispielsweise als Retraktor ausgeführt sein, welcher über eine Koppelvorrichtung mit der drehbar gelagerten Leitstruktur gekoppelt sein kann. Hierbei kann der Retraktor über die Koppelvorrichtung eine adaptive Dämpfungskraft gegen die Drehbewegung in die Leitstruktur einkoppeln. Die Koppelvorrichtung kann vorzugweise als Stahlseil ausgeführt sein, welches im oberen Drittel der Leitstruktur mit dieser verbunden ist. Hierbei kann der Retraktor ausgeführt sein, das Stahlseil bei Erreichen einer definierten Dämpfungskraft kontrolliert auszugeben. Selbstverständlich sind auch andere geeignete Ausführungsbeispiele der Koppelvorrichtung möglich. Für die Führung der Leitstruktur kann eine feste Anbindung verwendet werden, welche die Bewegung der Leitstruktur über die Koppelvorrichtung kontrolliert. Befestigt ist das Stahlseil am Retraktor, welcher das Stahlseil bei einer definierten Kraft ausgibt und diese Kraft somit auf einen definierten Wert begrenzt. Diese Kraft kann je nach Insassen und Position des Fahrzeugsitzes und eine Stellung der Sitzlehne angepasst werden. Allgemein gilt, je niedriger das Gurtkraftniveau, desto geringer das Verletzungsrisiko von Rippenfrakturen und desto geringer die Beschleunigung und Belastung des Kopfes. Große Insassen tolerieren bei gleichem Verletzungsrisiko höhere Kräfte am Sicherheitsgurt im Vergleich zu kleinen Insassen. Bei großen Insassen sind auch höhere Rückhaltekräfte notwendig, um einen Kontakt mit harten Bauteilen des Innenraumes zu vermeiden. Es ist somit prinzipiell kein Optimierungskonflikt vorhanden, um Insassen unterschiedlicher Größe und Gewicht ähnlich zu schützen, die Dämpfungswirkung muss jedoch zwischen Insassen unterschiedlicher Größe und Gewicht angepasst werden. Zu niedrigere Kräfte und somit größere Wege der Vorverlagerung können zu Interaktion mit der Schalttafel und somit Verletzungen hierdurch führen und müssen vom System vermieden werden. Da der Weg bekannt ist, welcher maximal ausgenutzt werden darf, bis ein Kontakt mit dem Innenraum stattfindet, kann das optimale Kraftniveau am Retraktor einfach abgeschätzt werden. Eine detailliertere Auslegung ist mit FE-Simulationen mit Dummies oder Menschmodellen möglich, bei denen auch Verletzungsrisiken berechnet und minimiert werden können. Auch bei größeren Lehnenwinkeln kann das Kraftniveau im Vergleich zur Normalposition abgesenkt und Verletzungsrisiken reduziert werden.

In alternativer Ausgestaltung der Rückhalteanordnung kann das Dämpfungselement als Rotationsdämpfer ausgeführt sein, welcher an einem Drehpunkt mit der drehbar gelagerten Leitstruktur gekoppelt ist und im Crashfall ein adaptives Dämpfungsmoment gegen die Drehbewegung der Leitstruktur erzeugen kann. Im Gegensatz zur vom Retraktor bereitgestellten Dämpfungskraft ist nun jedoch das Dämpfungsmoment des Rotationsdämpfers Auslegungsgrundlage für die Dämpfung der Vorverlagerung der drehbar gelagerten Leitstruktur. Eine direkte Umrechnung ist hierbei möglich. Das Dämpfungsmoment, welches der Rotationsdämpfer erzeugt, ist hierbei genauso groß, wie die Retraktorkraft multipliziert mit einer Länge vom Drehpunkt der Leitstruktur bis zum Retraktor. Als Umsetzung für den Rotationsdämpfer kann beispielsweise ein Torsionsstab aus Metall verwendet werden, welcher sich plastisch verformt. Auch eine Adaptivität durch unterschiedliche Torsionsstäbe ist möglich, welche während des Crashs aktiviert werden können. Auch Auslegung des Rotationsdämpfers kann während der Entwicklung mit FE-Simulationen mit Dummies oder Menschmodellen ermittelt werden, bei denen auch Verletzungsrisiken berechnet und minimiert werden können.

In vorteilhafter Ausgestaltung des Betriebsverfahrens kann basierend auf mindestens einer Eingangsgröße mindestens eine Ausgangsgröße ermittelt und die Vorverlagerung der drehbar gelagerten Leitstruktur entsprechend der ermittelten Ausgangsgröße eingestellt werden. Die mindestens eine Eingangsgröße kann beispielsweise eine Anthropometrie des Insassen und/oder einen Neigungswinkel der Sitzlehne und/oder eine Position des Fahrzeugsitzes und/oder einen Fahrzeugpuls betreffen, wie oben bereits ausgeführt wurde. Die mindestens eine Ausgangsgröße kann beispielsweise eine zu erzielende adaptive Dämpfungswirkung auf die Leitstruktur betreffen.

Die für die erfindungsgemäße Rückhalteanordnung für ein Fahrzeug beschriebenen Vorteile und bevorzugten Ausführungsformen gelten auch für das erfindungsgemäße Betriebsverfahren für eine solche Rückhalteanordnung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen. Hierbei zeigen:
- Fig. 1: eine schematisch und ausschnittsweise Darstellung eines Innenraums eines Fahrzeugs mit einem Ausführungsbeispiel einer erfindungsgemäßen Rückhalteanordnung;
- Fig. 2: eine schematische Darstellung der erfindungsgemäßen Rückhalteanordnung aus Fig. 1 mit einem ersten Ausführungsbeispiel einer als Dämpfungsvorrichtung ausgeführten dritten Rückhaltevorrichtung und einer Sitzlehne in einer Normalposition;
- Fig. 3: eine schematische Darstellung der erfindungsgemäßen Rückhalteanordnung mit der als Dämpfungsvorrichtung ausgeführten dritten Rückhaltevorrichtung aus Fig. 2 und der Sitzlehne in einer Komfortposition;
- Fig. 4: eine schematische Darstellung der erfindungsgemäßen Rückhalteanordnung mit der als Dämpfungsvorrichtung ausgeführten dritten Rückhaltevorrichtung aus Fig. 3 mit der Sitzlehne in der Komfortposition während eines Crashfalls in einem ersten Zustand;
- Fig. 5: eine schematische Darstellung der erfindungsgemäßen Rückhalteanordnung mit der als Dämpfungsvorrichtung ausgeführten dritten Rückhaltevorrichtung aus Fig. 4 mit der Sitzlehne in der Komfortposition während des Crashfalls in einem zweiten Zustand;
- Fig. 6: eine schematische Darstellung der erfindungsgemäßen Rückhalteanordnung mit der als Dämpfungsvorrichtung ausgeführten dritten Rückhaltevorrichtung aus Fig. 4 oder 5 mit der Sitzlehne in der Komfortposition während eines Crashfalls in einem dritten Zustand;
- Fig. 7: eine schematische Darstellung der erfindungsgemäßen Rückhalteanordnung mit der als Dämpfungsvorrichtung ausgeführten dritten Rückhaltevorrichtung aus Fig. 3 mit der Sitzlehne in der Normalposition für einen 95% Mann und ein korrespondierendes Kraft-Weg-Kennliniendiagramm des Retraktors;
- Fig. 8: eine schematische Darstellung der erfindungsgemäßen Rückhalteanordnung mit der als Dämpfungsvorrichtung ausgeführten dritten Rückhaltevorrichtung aus Fig. 3 mit der Sitzlehne in der Normalposition für eine 5% Frau und ein korrespondierendes Kraft-Weg-Kennliniendiagramm des Retraktors;
- Fig. 9: eine schematische Darstellung der erfindungsgemäßen Rückhalteanordnung mit der als Dämpfungsvorrichtung ausgeführten dritten Rückhaltevorrichtung aus Fig. 3 mit der Sitzlehne in der Komfortposition für eine 5% Frau und ein korrespondierendes Kraft-Weg-Kennliniendiagramm des Retraktors.
- Fig. 10: eine schematische Darstellung der erfindungsgemäßen Rückhalteanordnung aus Fig. 1 mit einem zweiten Ausführungsbeispiel einer als Dämpfungsvorrichtung ausgeführten dritten Rückhaltevorrichtung und der Sitzlehne in der Normalposition;
- Fig. 11: eine schematische Darstellung der erfindungsgemäßen Rückhalteanordnung mit der als Dämpfungsvorrichtung ausgeführten dritten Rückhaltevorrichtung aus Fig. 10 und der Sitzlehne in der Komfortposition;
- Fig. 12: ein schematisches Blockdiagramm einer Auswerte- und Steuereinheit für die erfindungsgemäße Rückhalteanordnung aus Fig. 1 bis 11; und
- Fig. 13: ein schematisches Ablaufdiagramm eines Betriebsverfahren für eine Rückhalteanordnung aus Fig. 1 bis 11.

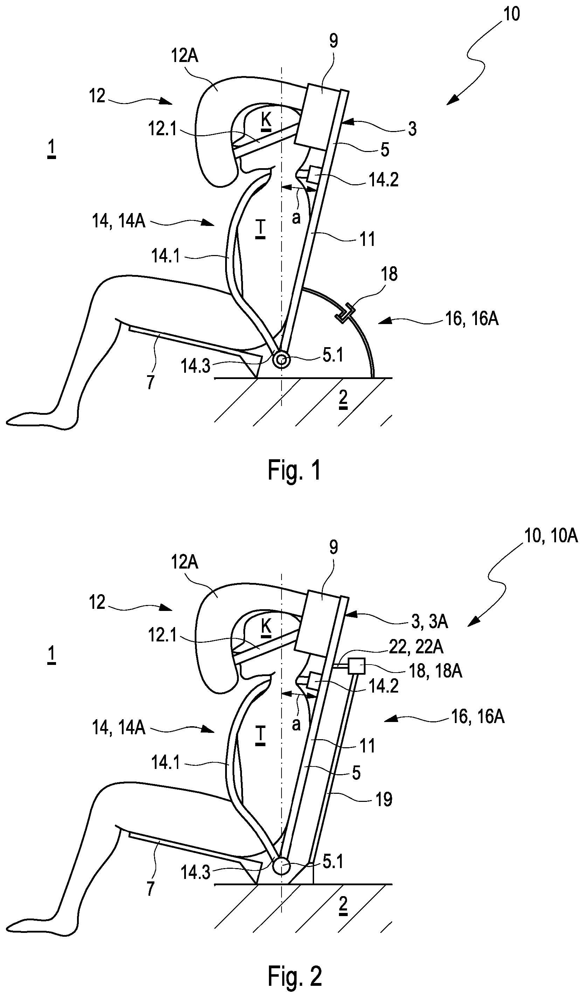

Wie aus Fig. 1 bis 11 ersichtlich ist, umfassen die dargestellten Ausführungsbeispiele einer erfindungsgemäßen Rückhalteanordnung 10, 10A, 10B für ein Fahrzeug 1 jeweils einen Fahrzeugsitz 3, welcher eine Sitzlehne 5, eine Sitzfläche 7 und eine Kopfstütze 9 umfasst, eine erste Rückhaltevorrichtung 12, welche im Crashfall einen Kopf K eines auf dem Fahrzeugsitz 3 sitzenden Insassen fest an eine drehbar gelagerte Leitstruktur 11 ankoppelt, eine zweite Rückhaltevorrichtung 14, welche im Crashfall einen Thorax T des auf dem Fahrzeugsitz 3 sitzenden Insassen fest an die drehbar gelagerte Leitstruktur 11 ankoppelt, und eine dritte Rückhaltevorrichtung 16, welche einen Energieabbau des Insassen im Crashfall durch eine definierte Vorverlagerung der drehbar gelagerten Leitstruktur 11 bewirkt, an welcher der Insasse im Crashfall mit Kopf K und Thorax T mit geringer Bewegungsfreiheit angekoppelt ist. Hierbei ist die drehbar gelagerte Leitstruktur 11 im Bereich der Sitzlehne 5 und der Kopfstütze 9 ausgebildet.

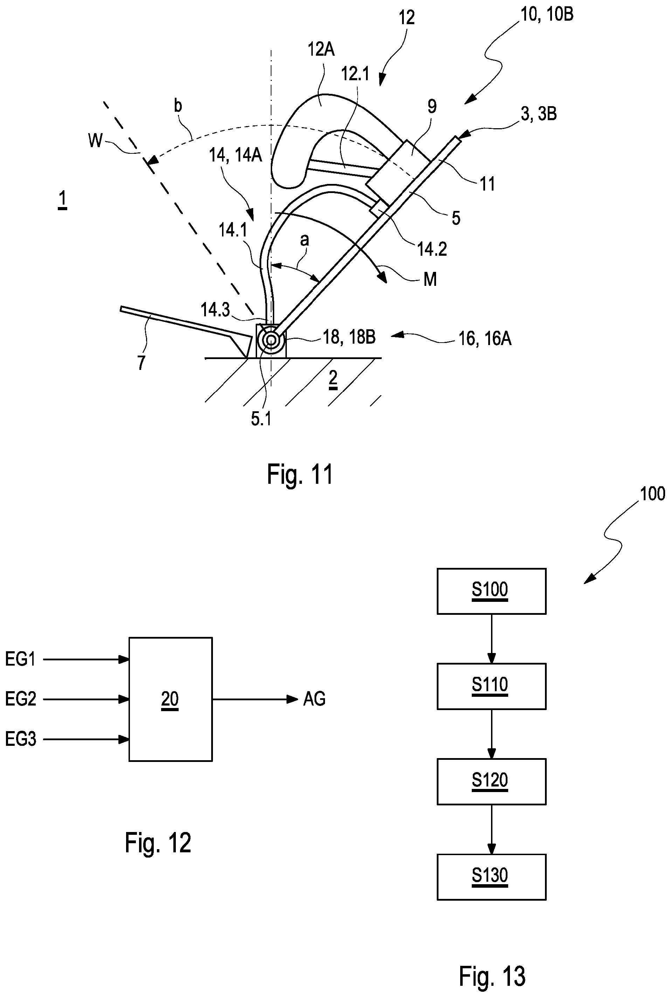

Wie au Fig. 1 bis 11 weiter ersichtlich ist, ist die erste Rückhaltevorrichtung 12 in den dargestellten Ausführungsbeispielen im Bereich der Kopfstütze 9 angeordnet, und die zweite Rückhaltevorrichtung 14 ist im Bereich der Sitzlehne 5 angeordnet. Wie aus Fig. 12 weiter ersichtlich ist, umfasst die erfindungsgemäße Rückhalteanordnung 10, 10A, 10B eine Auswerte- und Steuereinheit 20, welche basierend auf mindestens einer Eingangsgröße EG1, EG2, EG3 mindestens eine Ausgangsgröße AG ermittelt und die Vorverlagerung der Leitstruktur 11 entsprechend der ermittelten Ausgangsgröße AG über die dritte Rückhaltevorrichtung 16 einstellt. Im dargestellten Ausführungsbeispiel repräsentiert eine erste Eingangsgröße EG1 eine Anthropometrie des Insassen. Das bedeutet, dass beispielsweise Größe und Gewicht des Insassen durch eine nicht näher dargestellte Sensorik, welche beispielsweise eine Kamera und einen Gewichtssensor umfasst, ermittelt und der Auswerte- und Steuereinheit 20 als erste Eingangsgröße EG1 zur Verfügung gestellte werden. Eine zweite Eingangsgröße EG2 repräsentiert Informationen über den Fahrzeugsitz 3, auf welchem der Insasse sitzt. Das bedeutet, dass ein Neigungswinkel a der Sitzlehne 5 und eine Position des Fahrzeugsitzes 3 als zweite Eingangsgröße EG2 der Auswerte- und Steuereinheit 20 zur Verfügung gestellt werden. Eine dritte Eingangsgröße EG3 repräsentiert einen Fahrzeugpuls, welcher durch eine nicht näher dargestellte Crashsensorik erfasst und der Auswerte- und Steuereinheit 20 zur Verfügung gestellt wird. betrifft. Die mindestens eine Ausgangsgröße AG repräsentiert im dargestellten Ausführungsbeispiel eine durch die dritte Rückhaltevorrichtung 16 zu erzielende adaptive Dämpfungswirkung auf die Leitstruktur 11. Die Leitstruktur 11 ist mit der Sitzlehne 5 an einem Drehpunkt 5.1 drehbar an einem Strukturbauteil 2 des Fahrzeugs 1 gelagert.

Wie aus Fig. 1 bis 11 weiter ersichtlich ist, umfasst die erste Rückhaltevorrichtung 12 bei den dargestellten Ausführungsbeispielen der Rückhalteanordnung 10, 10A, 10B jeweils einen Kopfairbag 12A, welcher im Ruhezustand in der Kopfstütze 9 integriert ist und im Crashfall den Kopf K des Insassen über die Kopfstütze 9 fest an die drehbar gelagerte Leitstruktur 11 ankoppelt. Die zweite Rückhaltevorrichtung 14 umfasst ein Gurtsystem 14A mit mindestens einem Sicherheitsgurt 14.1 und mindestens einem Gurtretraktor 14.2, welches im Crashfall den Thorax T des Insassen über die Sitzlehne 5 fest an die drehbar gelagerte Leitstruktur 11 ankoppelt. Der Gurtretraktor 14.2 strafft im Crashfall den Sicherheitsgurt 14.1, um den Insassen besser an die Leitstruktur 12 anzukoppeln. Zudem ist eine Höhenverstellung der Kopfstütze 9 mit einer Höhenverstellung des Gurtretraktors 14.2 gekoppelt. Die dritte Rückhaltevorrichtung 16 ist in den dargestellten Ausführungsbeispielen als Dämpfungsvorrichtung 16A mit mindestens einem Dämpfungselement 18 ausgeführt.

Wie aus Fig. 2 bis 9 weiter ersichtlich ist, ist das Dämpfungselement 18 in einem ersten Ausführungsbeispiel der Rückhalteanordnung 10A als Retraktor 18A ausgeführt, welcher über eine Koppelvorrichtung 22 mit der drehbar gelagerten Leitstruktur 11 gekoppelt ist. Der Retraktor 18A koppelt über die Koppelvorrichtung 22 eine adaptive Dämpfungskraft F gegen die Drehbewegung in die Leitstruktur 11 ein. Die Koppelvorrichtung 22 ist als Stahlseil 22A ausgeführt, welches im oberen Drittel der Leitstruktur 11 mit dieser verbunden ist. Der Retraktor 18A gibt das Stahlseil 22A bei Erreichen einer definierten Dämpfungskraft kontrolliert aus. Der Retraktor 18A ist über einen Halter 19 mit einem Strukturbauteil 2 des Fahrzeugs 1 verbunden und kann analog zur Leitstruktur 11 in verschiedene Drehstellungen bewegt werden. Im Unterschied zur Leitstruktur 11 bleibt der Halter 19 im Crashfall in der eingestellten Drehstellung fixiert.

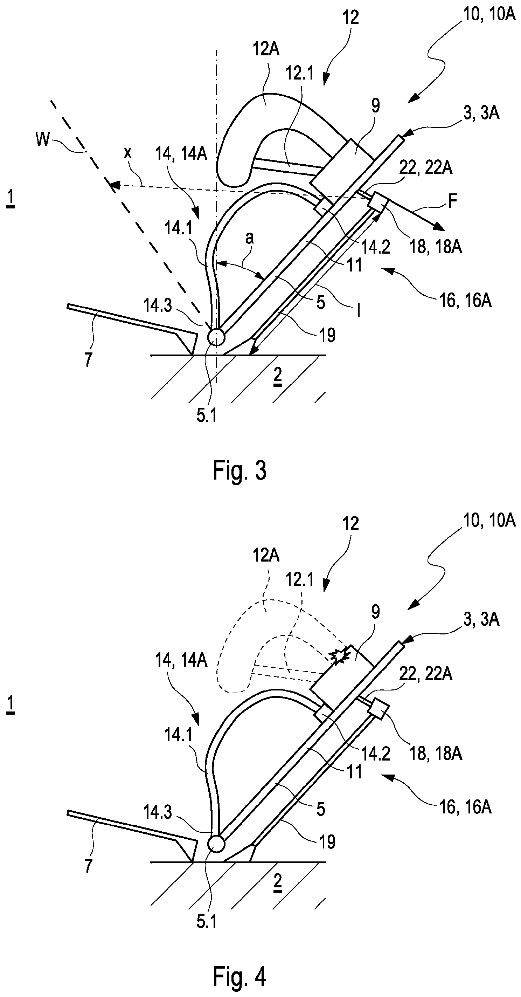

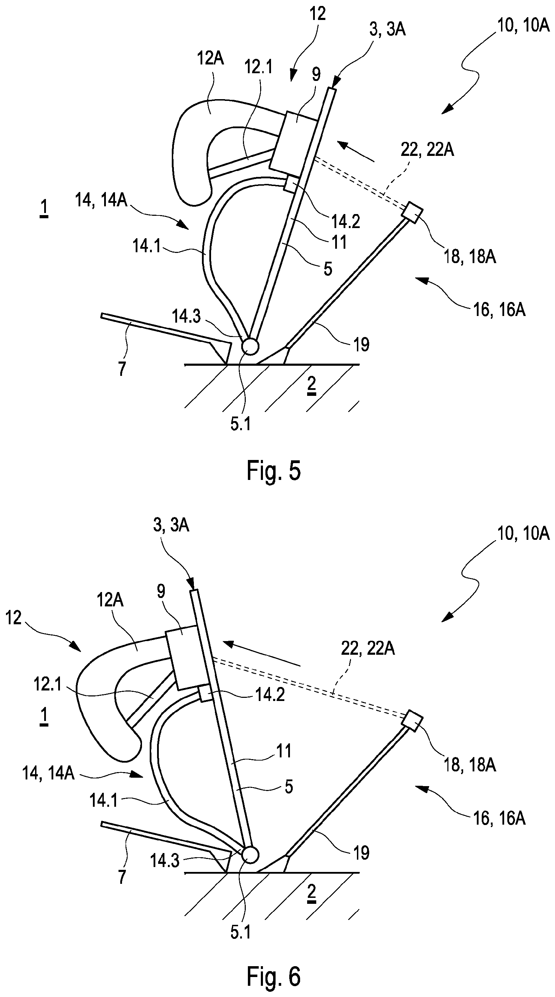

Nachfolgend wird unter Bezugnahme auf Fig. 4 bis 6 der zeitliche Ablauf während eines Crashfalls beschrieben. Wie aus Fig. 4 weiter ersichtlich ist, wird der Airbag 12A gezündet bzw. ausgelöst, wenn die nicht näher dargestellte Crashsensorik den Crash erkennt. Der Airbag 12A entfaltet sich aus der Kopfstütze 9 um den Kopf K des Insassen. Somit ist nur eine geringe Vorverlagerung des Kopfs K in Bezug zur Leitstruktur 11 möglich. Im dargestellten Ausführungsbeispiel sorgt ein Halteband 12.1 für eine Energieaufnahme des Kopfs K. Zeitgleich wird der Sicherheitsgurt 14.1 am Thorax T wie bei bekannten Rückhalteanordnungen gestrafft werden, um den Insassen noch besser an die Leitstruktur 11 anzukoppeln. Eine Kraftbegrenzung wie bei konventionellen Systemen weist dieser Gurtretraktor 14.2 nicht auf. Der Energieabbau erfolgt nun durch die in Fig. 5 und 6 dargestellte Vorverlagerung der Leitstruktur 11. So zeigt Fig. 5 die Vorverlagerung der Leitstruktur 11 nach ca. 50ms. Fig. 6 zeigt die maximale Vorverlagerung nach ca. 100ms, welche durch die biomechanischen Grenzen des Insassen und/oder durch den Innenraum definiert ist. Zudem weist der Retraktor 18A einen nicht näher bezeichneten Anschlag auf, welcher die Vorverlagerung der Leitstruktur 11 begrenzt und einen Kontakt des Insassen mit harten Bauteilen verhindert.

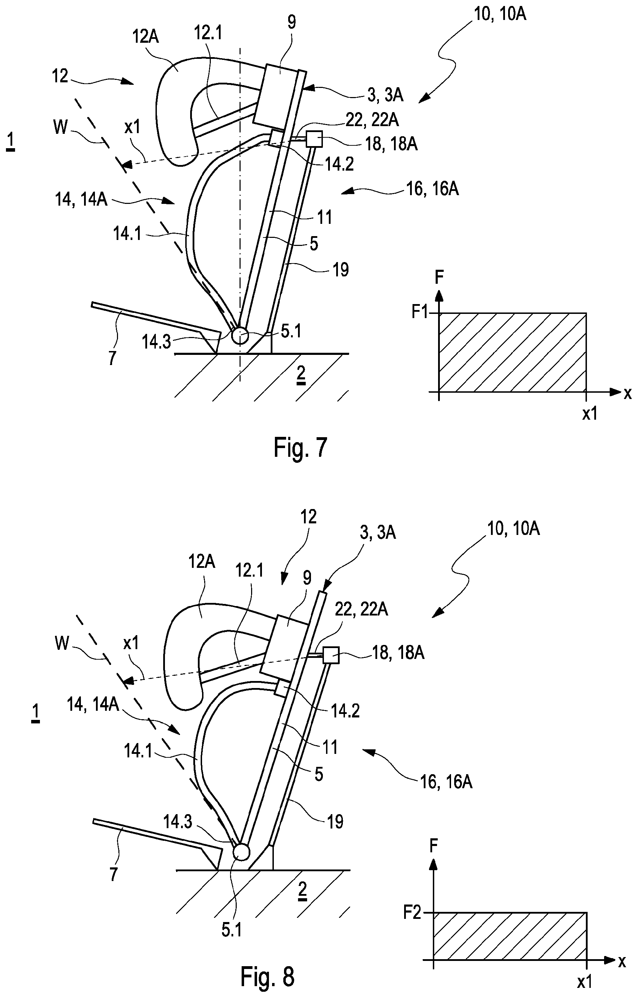

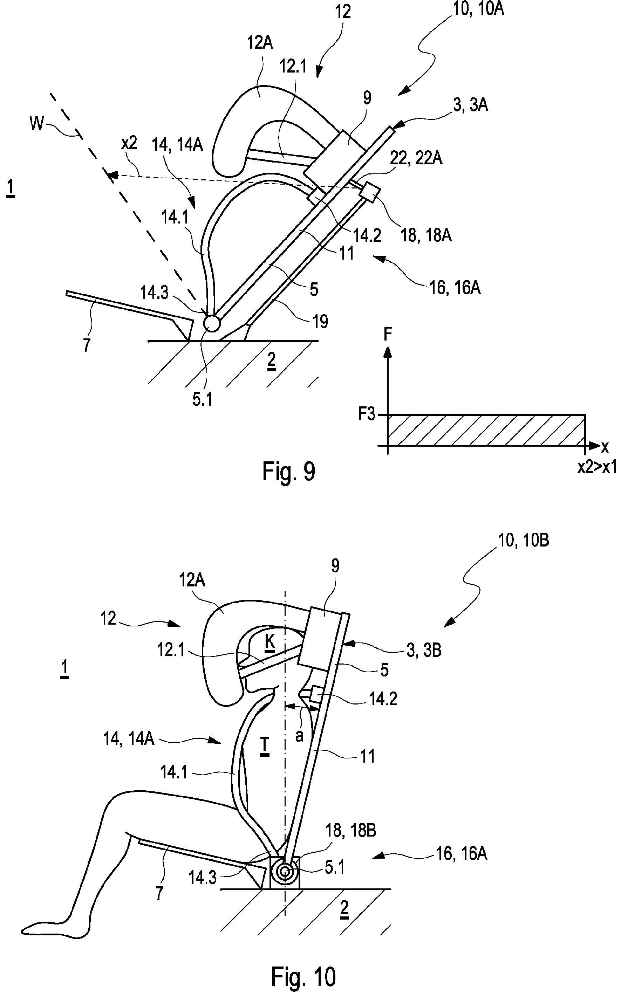

Die Dämpfung der Leitstruktur 11 wird im dargestellten ersten Ausführungsbeispiel der Rückhalteanordnung 10A durch den Retraktor 18A umgesetzt. In Fig. 7 bis 9 ist eine beispielhafte Umsetzung einer Variabilität des Kraftniveaus des Retraktors 18A dargestellt. Die Kopfstütze 9 und der Gurtretraktor 14.2 werden hierbei abhängig von der Körpergröße optimal für den Insassen eingestellt. Dargestellt sind exemplarisch Einstellmöglichkeiten für die in Gesetzen verwendeten standardisierten Insassen 5% Frau und 95% Mann. Die Prozentangabe bezieht sich auf die Verteilung innerhalb der Bevölkerung. Somit sind beispielsweise bei der 5% Frau nur 5% aller Frauen leichter und kleiner. So zeigt Fig. 7 die Einstellungen des Fahrzeugsitzes 3 für einen 95% Mann in einer Fahrposition bei einem normalen Lehnenwinkel a von ca. 25°. Fig. 8 zeigt die Einstellungen des Fahrzeugsitzes 3 für eine 5% Frau bei einem normalen Lehnenwinkel a von ca. 25°. Fig. 9 zeigt die Einstellungen des Fahrzeugsitzes 3 für eine 5% Frau in einer Komfortposition des Fahrzeugsitzes 3 mit einem größeren Lehnenwinkel a von ca. 40°. Durch die Höhenverstellung der Kopfstütze 9 ist eine optimale Entfaltung des Airbags 12A sichergestellt. Der Gurtretraktor 14.2 selbst kann parallel mitverschoben werden, um eine optimale Gurtanbindung zu garantieren und den höchsten Tragekomfort zu gewährleisten.

Die Auswerte- und Steuereinheit 20 stellt abhängig von der Anthropometrie und der Sitzlehnenneigung das Kraftniveau im Retraktor 18A so ein, dass über den Vorverlagerungsweg x der Leitstruktur 11 minimale Insassenbelastungen entstehen. Der Retraktor 18A weist unterschiedliche ansteuerbare Kraftniveaus auf. Zudem kann die Dämpfungskraft F auch während des Crashs verändert werden, nachdem das Seil 22A schon ausgezogen wurde. Allgemein gilt, je niedriger das Gurtkraftniveau, desto geringer das Verletzungsrisiko von Rippenfrakturen und desto geringer die Beschleunigung und Belastung des Kopfs K. Große Insassen tolerieren bei gleichem Verletzungsrisiko höhere Kräfte am Sicherheitsgurt im Vergleich zu kleinen Insassen. Bei großen Insassen sind auch höhere Rückhaltekräfte notwendig, um einen Kontakt mit harten Bauteilen des Innenraumes zu vermeiden. Es ist somit prinzipiell kein Optimierungskonflikt vorhanden, um Insassen unterschiedlicher Größe und Gewicht ähnlich zu schützen, die Dämpfungswirkung muss jedoch zwischen Insassen unterschiedlicher Größe und Gewicht angepasst werden. Eine exemplarische Auslegung der Adaptivität der Rückhalteanordnung 10 soll an den zwei im Gesetz definierten Insassen 5% Frau mit einem Gewicht von m = 49kg und dem 95% Mann mit einem Gewicht von m = 101kg verdeutlicht werden. Fig. 7 bis 9 zeigen die entsprechende Rückhalteanordnung 10A und eine exemplarische, stark vereinfachte Auslegung mit der entsprechenden kinetischen Energie der jeweiligen Insassen. Für das Beispiel wird ein im amerikanischen Gesetz definierter Lastfall verwendet. Hierbei fährt das Fahrzeug 1 mit 56 km/h frontal gegen eine Wand. Die Rückhalteanordnung 10A in Fig. 7 bis 9 wurde nun abgestimmt, dass die kinetische Energie des jeweiligen Insassen vom Retraktor 18A abgebaut wird. Bei der steileren Lehnenneigung in Fig. 7 und 8 kann ein erster Weg x1 ausgenutzt werden, bis gerade noch eine Interaktion mit dem Innenraum vermieden wird. Das bedeutet, dass die gestrichelte Linie VV die maximal mögliche Vorverlagerung anzeigt. Im Vergleich zwischen dem in Fig. 7 dargestellten Kraft-Weg-Diagramm für den 95% Mann und dem in Fig. 8 dargestellten Kraft-Weg-Diagramm für die 5% Frau, ist die Rückhaltekraft F2 für die 5% Frau bei gleichem verfügbaren Weg x1 deutlich niedriger als die Rückhaltekraft F1 für den 95% Mann. Für die in Fig. 9 dargestellte Komfortposition ist ein ausnutzbarer zweiter Weg x2 länger als der erste Weg x1 aus Fig. 7 und 8. Im Vergleich zwischen dem in Fig. 8 dargestellten Kraft-Weg-Diagramm für die 5% Frau bei einem verfügbaren ersten Weg x1 und dem in Fig. 9 dargestellte Kraft-Weg-Diagramm für die 5% Frau bei einem verfügbaren längeren zweiten Weg x2, ist die Rückhaltekraft F3 für die 5% Frau bei dem längeren verfügbaren Weg x2 in Fig. 9 deutlich niedriger als die Rückhaltekraft F2 für die 5% Frau bei dem kürzeren verfügbaren Weg x1 in Fig. 8. Kürzere Wege x1 erfordern höhere Dämpfungskräfte F und verursachen höhere Verletzungsrisiken des Thorax T. Zu niedrigere Dämpfungskräfte F und daraus resultierende länger Wege können in der Normalposition zur Interaktion des Insassen mit der Instrumententafel und somit zu Verletzungen führen und werden von der Auswerte- und Steuereinheit 20 vermieden werden. Da der maximal auszunutzende Weg x bekannt ist, bis ein Kontakt mit dem Innenraum stattfindet, kann das optimale Kraftniveau am Retraktor 18A gut abgeschätzt werden. Eine detailliertere Auslegung ist mit FE-Simulationen mit Dummies oder Menschmodellen möglich, bei denen auch Verletzungsrisiken berechnet und minimiert werden können. Auch bei größeren Lehnenwinkeln a in Komfortpositionen kann das Kraftniveau des Retraktors 18A im Vergleich zur Normalposition abgesenkt und Verletzungsrisiken reduziert werden.

Wie aus Fig 10 und 11 weiter ersichtlich ist, ist das Dämpfungselement 18 im dargestellten zweiten Ausführungsbeispiel der Rückhalteanordnung 10B als Rotationsdämpfer 18B ausgeführt, welcher an einem Drehpunkt 5.1 mit der drehbar gelagerten Leitstruktur 11 gekoppelt ist und im Crashfall ein adaptives Dämpfungsmoment gegen die Drehbewegung der Leitstruktur 11 erzeugt.

Für den Rotationsdämpfer 18B erfolgt die Auslegung analog zum Retraktor 18A. Im Gegensatz zur Retraktorkraft F bildet nun jedoch das Dämpfungsmoment M des Rotationsdämpfers 18B über den Drehwinkel b die Auslegungsgrundlage. Eine direkte Umrechnung ist hierbei möglich. Das Dämpfungsmoment M, welches der Rotationsdämpfer 18B erzeugt ist hierbei genauso groß, wie die Retraktorkraft F multipliziert mit der Länge l vom Drehpunkt 5.1 der Leitstruktur 11 bis zum Retraktor 18A.

Wie aus Fig. 13 ersichtlich ist, umfasst das dargestellte Ausführungsbeispiel des erfindungsgemäßen Betriebsverfahrens 100 für die oben beschriebene Rückhalteanordnung 10 einen Schritt S100, in welchem ein bevorstehender Crash erkannt wird. Im Schritt S110 wird bei einem erkannten Crashfall ein Kopf K eines in einem Fahrzeugsitz 3 sitzenden Insassen fest an eine drehbar gelagerte Leitstruktur 11 angekoppelt. Zeitgleich wird im Schritt S120 ein Thorax T des in dem Fahrzeugsitz 3 sitzenden Insassen fest an die drehbar gelagerte Leitstruktur 11 angekoppelt. Im Schritt S130 bewirkt eine definierte Vorverlagerung der drehbar gelagerten Leitstruktur 11 einen Energieabbau des Insassen im Crashfall.

Hierbei wird basierend auf mindestens einer Eingangsgröße EG1, EG2, EG3 mindestens eine Ausgangsgröße AG ermittelt und die Vorverlagerung der drehbar gelagerten Leitstruktur 11 entsprechend der ermittelten Ausgangsgröße AG eingestellt. Die mindestens eine Eingangsgröße EG1, EG2, EG3 eine Anthropometrie des Insassen und/oder einen Neigungswinkel a der Sitzlehne 5 und/oder eine Position des Fahrzeugsitzes 3 und/oder einen Fahrzeugpuls, wobei die mindestens eine Ausgangsgröße AG eine zu erzielende adaptive Dämpfungswirkung auf die Leitstruktur 11 betrifft.

### BEZUGSZEICHENLISTE

- 1: Fahrzeug
- 2: Strukturbauteil
- 3: Fahrzeugsitz
- 5: Sitzlehne
- 5.1: Drehpunkt
- 7: Sitzfläche
- 9: Kopfstütze
- 10, 10A, 10B: Rückhalteanordnung für ein Fahrzeug
- 11: Leitstruktur
- 12: erste Rückhaltevorrichtung
- 12A: Kopfairbag
- 12.1: Halteband
- 14: zweite Rückhaltevorrichtung
- 14A: Gurtsystem
- 14.1: Sicherheitsgurt
- 14.2: Gurtretraktor
- 14.3: Gurtanbindung
- 16: dritte Rückhaltevorrichtung
- 16A: Dämpfungsvorrichtung
- 18: Dämpfungselement
- 18A: Retraktor
- 18B: Rotationsdämpfer
- 19: Halter
- 20: Auswerte- und Steuereinheit
- 22: Koppelvorrichtung
- 22A: Stahlseil
- EG1, EG2, EG3: Eingangsgröße
- AG: Ausgangsgröße
- a: Lehnenwinkel
- VV: maximal mögliche Vorverlagerung
- x, x1, x2: Weg
- l: Länge
- b: Rotationswinkel
- F, F1, F2, F3: Dämpfungskraft
- M: Dämpfungsmoment
- K: Kopf
- T: Thorax
- 100: Betriebsverfahren für eine Rückhalteanordnung
- S100 bis S130: Verfahrensschritt

## Patentansprüche

1. Rückhalteanordnung (10) für einen Fahrzeugsitz (3), welcher eine Sitzlehne (5), eine Sitzfläche (7) und eine Kopfstütze (9) umfasst, mit einer ersten Rückhaltevorrichtung (12), welche ausgeführt ist, im Crashfall einen Kopf (K) eines auf dem Fahrzeugsitz (3) sitzenden Insassen fest an eine drehbar gelagerte Leitstruktur (11) anzukoppeln, und einer zweiten Rückhaltevorrichtung (14), welche ausgeführt ist, im Crashfall einen Thorax (T) des auf dem Fahrzeugsitz (3) sitzenden Insassen fest an die drehbar gelagerte Leitstruktur (11) anzukoppeln, **gekennzeichnet durch** eine dritte Rückhaltevorrichtung (16), welche ausgeführt ist, einen Energieabbau des Insassen im Crashfall durch eine definierte Vorverlagerung der drehbar gelagerten Leitstruktur (11) zu bewirken, an welche der Insasse im Crashfall mit Kopf (K) und Thorax (T) mit geringer Bewegungsfreiheit angekoppelt ist, wobei die drehbar gelagerte Leitstruktur (11) in Fahrtrichtung im Bereich hinter der Kopfstütze (9) und hinter der Sitzlehne (5) ausgebildet ist.

2. Rückhalteanordnung (10) nach Anspruch 1,
**dadurch gekennzeichnet,**
**dass** eine Auswerte- und Steuereinheit (20) ausgeführt ist, basierend auf mindestens einer Eingangsgröße (EG1, EG2, EG3) mindestens eine Ausgangsgröße (AG) zu ermitteln und die Vorverlagerung der drehbar gelagerten Leitstruktur (11) entsprechend der ermittelten Ausgangsgröße (AG) über die dritte Rückhaltevorrichtung (16) einzustellen.

3. Rückhalteanordnung (10) nach Anspruch 2,
**dadurch gekennzeichnet,**
**dass** die mindestens eine Eingangsgröße (EG1, EG2, EG3) eine Anthropometrie des Insassen und/oder einen Neigungswinkel (a) der Sitzlehne (5) und/oder eine Position des Fahrzeugsitzes (3) und/oder einen Crash-Puls betrifft.

4. Rückhalteanordnung (10) nach Anspruch 2 oder 3,
**dadurch gekennzeichnet,**
**dass** die mindestens eine Ausgangsgröße (AG) eine durch die dritte Rückhaltevorrichtung (16) zu erzielende adaptive Dämpfungswirkung auf die Leitstruktur (11) betrifft.

5. Rückhalteanordnung (10) nach einem der Ansprüche 1 bis 4,
**dadurch gekennzeichnet,**
**dass** die erste Rückhaltevorrichtung (12) einen Kopfairbag (12A) umfasst, welcher im Ruhezustand in der Kopfstütze (9) des Fahrzeugsitzes (3) integriert ist und ausgeführt ist, im Crashfall den Kopf (K) des Insassen über die Kopfstütze (9) fest an die drehbar gelagerte Leitstruktur (11) anzukoppeln.

6. Rückhalteanordnung (10) nach einem der Ansprüche 1 bis 5,
**dadurch gekennzeichnet,**
**dass** die zweite Rückhaltevorrichtung (14) ein Gurtsystem (14A) mit mindestens einem Sicherheitsgurt (14.1) und mindestens einem Gurtretraktor (14.2) umfasst, welches im Bereich der Sitzlehne (5) des Fahrzeugsitzes (3) angeordnet und ausgeführt ist, im Crashfall den Thorax (T) des Insassen über die Sitzlehne (5) fest an die drehbar gelagerte Leitstruktur (11) anzukoppeln.

7. Rückhalteanordnung (10) nach 6,
**dadurch gekennzeichnet,**
**dass** der Gurtretraktor (14.2) ausgeführt ist, den Sicherheitsgurt (14.1) im Crashfall zu straffen.

8. Rückhalteanordnung (10) nach 6 oder 7,
**dadurch gekennzeichnet,**
**dass** eine Höhenverstellung der Kopfstütze (9) mit einer Höhenverstellung des Gurtretraktors (14.2) gekoppelt ist.

9. Rückhalteanordnung (10) nach einem der Ansprüche 1 bis 8,
**dadurch gekennzeichnet,**
**dass** die dritte Rückhaltevorrichtung (16) als Dämpfungsvorrichtung (16A) mit mindestens einem Dämpfungselement (18) ausgeführt ist.

10. Rückhalteanordnung (10) nach 9,
**dadurch gekennzeichnet,**
**dass** das Dämpfungselement (18) als Retraktor (18A) ausgeführt ist, welcher über eine Koppelvorrichtung (22) mit der drehbar gelagerten Leitstruktur (11) gekoppelt ist, wobei der Retraktor (18A) über die Koppelvorrichtung (22) eine adaptive Dämpfungskraft (F) gegen die Drehbewegung in die Leitstruktur (11) einkoppelt.

11. Rückhalteanordnung (10) nach 10,
**dadurch gekennzeichnet,**
**dass** die Koppelvorrichtung (22) als Stahlseil (22A) ausgeführt ist, welches im oberen Drittel der Leitstruktur (11) mit dieser verbunden ist, wobei der Retraktor (18A) ausgeführt ist, das Stahlseil (22A) bei Erreichen einer definierten Dämpfungskraft (F) kontrolliert auszugeben.

12. Rückhalteanordnung (10) nach 9,
**dadurch gekennzeichnet,**
**dass** das Dämpfungselement (18) als Rotationsdämpfer (18B) ausgeführt ist, welcher an einem Drehpunkt (5.1) mit der drehbar gelagerten Leitstruktur (11) gekoppelt ist und im Crashfall ein adaptives Dämpfungsmoment gegen die Drehbewegung der Leitstruktur (11) erzeugt.

13. Betriebsverfahren für eine nach einem der Ansprüche 1 bis 12 ausgeführten Rückhalteanordnung (10), wobei im Crashfall ein Kopf (K) und ein Thorax (T) eines in einem Fahrzeugsitz (3) sitzenden Insassen fest an eine drehbar gelagerte Leitstruktur (11) angekoppelt wird, wobei durch eine definierte Vorverlagerung der drehbar gelagerten Leitstruktur (11) ein Energieabbau des Insassen im Crashfall bewirkt wird.

14. Betriebsverfahren nach Anspruch 13,
**dadurch gekennzeichnet,**
**dass** basierend auf mindestens einer Eingangsgröße (EG1, EG2, EG3) mindestens eine Ausgangsgröße (AG) ermittelt und die Vorverlagerung der drehbar gelagerten Leitstruktur (11) entsprechend der ermittelten Ausgangsgröße (AG) eingestellt wird.

15. Betriebsverfahren nach Anspruch 14,
**dadurch gekennzeichnet,**
**dass** die mindestens eine Eingangsgröße (EG1, EG2, EG3) eine Anthropometrie des Insassen und/oder einen Neigungswinkel (a) der Sitzlehne (5) und/oder einen Crash-Puls betrifft, wobei die mindestens eine Ausgangsgröße (AG) eine zu erzielende adaptive Dämpfungswirkung auf die Leitstruktur (11) betrifft.

## Claims

1. Restraint assembly (10) for a vehicle seat (3), which comprises a backrest (5), a seat base (7) and a headrest (9), having a first restraint device (12) which is configured, in the event of a crash, to firmly couple a head (K) of an occupant sitting on the vehicle seat (3) to a rotatably mounted guide structure (11), and a second restraint device (14), which is configured, in the event of a crash, to firmly couple a thorax (T) of the occupant sitting on the vehicle seat (3) to the rotatably mounted guide structure (11), **characterized by** a third restraint device (16), which is configured to bring about a reduction in energy of the occupant in the event of a crash by a defined forwards displacement of the rotatably mounted guide structure (11) to which the occupant is coupled in the event of a crash with the head (K) and thorax (T) with little freedom of movement, wherein the rotatably mounted guide structure (11) is formed in the direction of travel in the region behind the headrest (9) and behind the backrest (5).

2. Restraint assembly (10) according to claim 1,
**characterized in that**
an evaluation unit and controller (20) is configured to determine at least one output variable (AG) based on at least one input variable (EG1, EG2, EG3) and to adjust the forwards displacement of the rotatably mounted guide structure (11) in accordance with the determined output variable (AG) via the third restraint device (16).

3. Restraint assembly (10) according to claim 2,
**characterized in that**
the at least one input variable (EG1, EG2, EG3) relates to the anthropometry of the occupant and/or an angle of inclination (a) of the backrest (5) and/or a position of the vehicle seat (3) and/or a crash pulse.

4. Restraint assembly (10) according to claim 2 or 3,
**characterized in that**
the at least one output variable (AG) relates to an adaptive damping effect on the guide structure (11) to be achieved by the third restraint device (16).

5. Restraint assembly (10) according to any one of claims 1 to 4,
**characterized in that**
the first restraint device (12) comprises a head airbag (12A) which, in the rest position, is integrated into the headrest (9) of the vehicle seat (3) and is configured, in the event of a crash, to firmly couple the head (K) of the occupant to the rotatably mounted guide structure (11) via the headrest (9).

6. Restraint assembly (10) according to any one of claims 1 to 5,
**characterized in that**
the second restraint device (14) comprises a belt system (14A) with at least one safety belt (14.1) and at least one belt retractor (14.2), which is arranged and configured in the region of the backrest (5) of the vehicle seat (3) to firmly couple the thorax (T) of the occupant to the rotatably mounted guide structure (11) via the backrest (5) in the event of a crash.

7. Restraint assembly (10) according to claim 6,
**characterized in that**
the belt retractor (14.2) is configured to tighten the safety belt (14.1) in the event of a crash.

8. Restraint assembly (10) according to claim 6 or 7,
**characterized in that**
a height adjustment of the headrest (9) is coupled to a height adjustment of the belt retractor (14.2).

9. Restraint assembly (10) according to any one of claims 1 to 8,
**characterized in that**
the third restraint device (16) is configured as a damping device (16A) having at least one damping element (18).

10. Restraint assembly (10) according to claim 9,
**characterized in that**
the damping element (18) is configured as a refractor (18A) which is coupled to the rotatably mounted guide structure (11) via a coupling device (22), wherein the refractor (18A) couples an adaptive damping force (F) against the rotational movement into the guide structure (11) via the coupling device (22).

11. Restraint assembly (10) according to claim 10,
**characterized in that**
the coupling device (22) is configured as a steel cable (22A) which is connected to the guide structure (11) in the upper third thereof, wherein the refractor (18A) is configured to release the steel cable (22A) in a controlled manner when a defined damping force (F) is reached.

12. Restraint assembly (10) according to claim 9,
**characterized in that**
the damping element (18) is configured as a rotation damper (18B) which is coupled to the rotatably mounted guide structure (11) at a rotation point (5.1) and, in the event of a crash, generates an adaptive damping torque against the rotational movement of the guide structure (11).

13. Operating method for a restraint arrangement (10) according to any one of claims 1 to 12, wherein, in the event of a crash, a head (K) and a thorax (T) of an occupant sitting in a vehicle seat (3) are firmly coupled to a rotatably mounted guide structure (11), wherein a defined forwards displacement of the rotatably mounted guide structure (11) brings about a reduction in energy of the occupant in the event of a crash.

14. Operating method according to claim 13,
**characterized in that**
based on at least one input variable (EG1, EG2, EG3) at least one output variable (AG) is determined and the forwards displacement of the rotatably mounted guide structure (11) is adjusted in accordance with the determined output variable (AG).

15. Operating method according to claim 14,
**characterized in that**
the at least one input variable (EG1, EG2, EG3) relates to the anthropometry of the occupant and/or an angle of inclination (a) of the backrest (5) and/or a crash pulse, wherein the at least one output variable (AG) relates to an adaptive damping effect to be achieved on the guide structure (11).

## Revendications

1. Ensemble de retenue (10) pour un siège de véhicule (3) qui comprend un dossier de siège (5), une surface de siège (7) et un appui-tête (9), avec un premier dispositif de retenue (12) qui est formé afin de coupler en cas de collision une tête (K) d'un occupant assis sur le siège de véhicule (3) fixement à une structure de guidage (11) logée de manière rotative, et un deuxième dispositif de retenue (14) qui est formé afin de coupler en cas de collision un thorax (T) de l'occupant assis sur le siège de véhicule (3) fixement à la structure de guidage (11) logée de manière rotative, **caractérisé par** un troisième dispositif de retenue (16) qui est formé afin de provoquer une réduction d'énergie de l'occupant en cas de collision par un déplacement vers l'avant défini de la structure de guidage (11) logée de manière rotative, à laquelle l'occupant est couplé en cas de collision avec la tête (K) et le thorax (T) avec une liberté de déplacement faible, dans lequel la structure de guidage (11) logée de manière rotative est formée dans le sens de la marche dans la zone derrière l'appui-tête (9) et derrière le dossier de siège (5).

2. Ensemble de retenue (10) selon la revendication 1,
**caractérisé en ce que**
un dispositif d'évaluation et de commande (20) est formé afin de déterminer sur la base d'au moins une grandeur d'entrée (EG1, EG2, EG3) au moins une grandeur de sortie (AG) et de régler le déplacement vers l'avant de la structure de guidage (11) logée de manière rotative selon la grandeur de sortie (AG) déterminée par le biais du troisième dispositif de retenue (16).

3. Ensemble de retenue (10) selon la revendication 2,
**caractérisé en ce que**
l'au moins une grandeur d'entrée (EG1, EG2, EG3) concerne une anthropométrie de l'occupant et/ou un angle d'inclinaison (a) du dossier de siège (5) et/ou une position du siège de véhicule (3) et/ou une impulsion de collision.

4. Ensemble de retenue (10) selon la revendication 2 ou 3,
**caractérisé en ce que**
l'au moins une grandeur de sortie (AG) concerne une action d'amortissement adaptative à obtenir par le troisième dispositif de retenue (16) sur la structure de guidage (11).

5. Ensemble de retenue (10) selon l'une quelconque des revendications 1 à 4,
**caractérisé en ce que**
le premier dispositif de retenue (12) comprend un airbag de tête (12A) qui est intégré dans l'état de repos dans l'appui-tête (9) du siège de véhicule (3) et est formé afin de coupler en cas de collision la tête (K) de l'occupant par le biais de l'appui-tête (9) fixement à la structure de guidage (11) logée de manière rotative.

6. Ensemble de retenue (10) selon l'une quelconque des revendications 1 à 5,
**caractérisé en ce que**
le deuxième dispositif de retenue (14) comprend un système de ceinture (14A) avec au moins une ceinture de sécurité (14.1) et au moins un rétracteur de ceinture (14.2) qui est agencé dans la zone du dossier de siège (5) du siège de véhicule (3) et formé afin de coupler en cas de collision le thorax (T) de l'occupant par le biais du dossier de siège (5) fixement à la structure de guidage (11) logée de manière rotative.

7. Ensemble de retenue (10) selon la revendication 6,
**caractérisé en ce que**
le rétracteur de ceinture (14.2) est formé afin de tendre la ceinture de sécurité (14.1) en cas de collision.

8. Ensemble de retenue (10) selon la revendication 6 ou 7,
**caractérisé en ce que**
un réglage en hauteur de l'appui-tête (9) est couplé à un réglage en hauteur du rétracteur de ceinture (14.2).

9. Ensemble de retenue (10) selon l'une quelconque des revendications 1 à 8,
**caractérisé en ce que**
le troisième dispositif de retenue (16) est formé comme dispositif d'amortissement (16A) avec au moins un élément d'amortissement (18).

10. Ensemble de retenue (10) selon la revendication 9,
**caractérisé en ce que**
l'élément d'amortissement (18) est formé comme réfracteur (18A) qui est couplé par le biais d'un dispositif de couplage (22) à la structure de guidage (11) logée de manière rotative, dans lequel le réfracteur (18A) injecte par le biais du dispositif de couplage (22) une force d'amortissement (F) adaptative contre le mouvement de rotation dans la structure de guidage (11).

11. Ensemble de retenue (10) selon la revendication 10,
**caractérisé en ce que**
le dispositif de couplage (22) est formé comme câble d'acier (22A) qui est relié dans le tiers supérieur de la structure de guidage (11) à celle-ci, dans lequel le réfracteur (18A) est formé afin de sortir de manière commandée le câble d'acier (22A) lors de l'atteinte d'une force d'amortissement (F) définie.

12. Ensemble de retenue (10) selon la revendication 9,
**caractérisé en ce que**
l'élément d'amortissement (18) est formé comme amortisseur de rotation (18B) qui est couplé en un point de rotation (5.1) à la structure de guidage (11) logée de manière rotative et génère en cas de collision un couple d'amortissement adaptatif contre le mouvement de rotation de la structure de guidage (11).

13. Procédé de fonctionnement pour un ensemble de retenue (10) formé selon l'une quelconque des revendications 1 à 12, dans lequel en cas de collision, une tête (K) et un thorax (T) d'un occupant assis dans un siège de véhicule (3) est couplé fixement à une structure de guidage (11) logée de manière rotative, dans lequel une réduction d'énergie de l'occupant en cas de collision est provoquée par un déplacement vers l'avant défini de la structure de guidage (11) logée de manière rotative.

14. Procédé de fonctionnement selon la revendication 13,
**caractérisé en ce que**
au moins une grandeur de sortie (AG) est déterminée sur la base d'au moins une grandeur d'entrée (EG1, EG2, EG3) et le déplacement vers l'avant de la structure de guidage (11) logée de manière rotative est réglé selon la grandeur de sortie (AG) déterminée.

15. Procédé de fonctionnement selon la revendication 14,
**caractérisé en ce que**
l'au moins une grandeur d'entrée (EG1, EG2, EG3) concerne une anthropométrie de l'occupant et/ou un angle d'inclinaison (a) du dossier de siège (5) et/ou une impulsion de collision, dans lequel l'au moins une grandeur de sortie (AG) concerne une action d'amortissement adaptative à obtenir sur la structure de guidage (11).
